# EUROPEAN PATENT SPECIFICATION

(11) **EP 3 065 264 B1**
(45) Date of publication and mention of the grant of the patent: **06.11.2019**
(21) Application number: 16158800.9
(22) Date of filing: 04.03.2016
(51) Int. Cl.: H02J 50/90, H02J 50/10, H02J 9/00

(54) **WIRELESS CHARGING TRANSMITTER USING REDUNDANT SENSING FOR DEVICE DETECTION**
DRAHTLOSER LADESENDER MIT REDUNDANTER MESSUNG ZUR VORRICHTUNGSDETEKTION
ÉMETTEUR DE CHARGEMENT SANS FIL UTILISANT UNE DÉTECTION REDONDANTE POUR LA DÉTECTION D'UN DISPOSITIF

(30) Priority: 06.03.2015 US 201562129112 P; 03.03.2016 US 201615059490
(43) Date of publication of application: 07.09.2016
(73) Proprietor: MediaTek Inc., Hsin-Chu 300 (TW)
(72) Inventor: RIEHL, Patrick, Lynnfield, MA 01940 (US)
(74) Representative: Gilani, Anwar

(56) References cited:
- WO-A1-2014/070026
- WO-A2-2011/007300
- US-A1- 2011 250 928
- US-A1- 2013 241 300
- US-A1- 2014 049 422
- US-A1- 2014 197 693
- US-A1- 2014 197 782

## Description

### BACKGROUND

### 1. Technical Field

The apparatus and techniques described herein relate generally to wireless power delivery, and to detection of devices to be charged or powered by a wireless power transmitter.

### 2. Discussion of the Related Art

Wireless Power Transfer Systems (WPTS) are gaining increasing popularity as convenient way to deliver power without wires or connectors. WPTS currently under development in the industry can be separated in two major classes: magnetic induction (MI) systems and magnetic resonance (MR) systems. Both types of systems include a transmitting unit, sometimes referred to as a power transmitting unit (PTU), and a receiving unit, sometimes referred to as a power receiving unit (PRU). Typically, the PTU is used to wirelessly charge mobile devices such as smartphones, portable music players, tablets, and laptops, among other devices and applications. The mobile devices may include a PRU.

Inductive WPTS typically operate in an allocated frequency range of several hundred kilohertz using frequency variation as a power flow control mechanism. MR WPTS typically operate on a single resonant frequency using input voltage regulation to regulate output power. In typical applications, MR WPTS operate at a frequency of 6.78 MHz.

Several industry committees such as the Wireless Power Consortium (WPC), the recently-merged Power Matters Alliance (PMA), and the Alliance for Wireless Power (A4WP), collectively A4WP/PMA, are working on developing international standards for consumer products based on wireless power transfer. The standards may include, for example, specifications on an amount of rectified current, voltage, and/or power generated at a PRU via the device's receiving coil and power rectification circuitry. In addition to these standards, some governing bodies may place restrictions relating to safety and/or energy consumption on consumer electronics.

US 2014/197693 discloses a contactless power transmission device including a power receiver and a capacitive sensor.

WO 2011/007300 discloses a system for transmitted power inductively from a transmitter to a receiver, the receiver comprising a signal generator for generating a signal triggered by an event reflecting that the receiver intends to receive power from the transmitter.

WO 2014/070026 discloses an inductively coupled power transfer system having a force detector to detect a force applied by a device due to its placement on a charging surface.

### SUMMARY

Described embodiments relate to apparatus and methods for detecting and confirming that a device to be charged has been placed in a charging region of a wireless power transmitter. The methods include operating the wireless power transmitter in a low-power, standby operating mode during which a first method of device detection is employed. In various embodiments, the first method of device detection consumes significantly less power than device-detection schemes employed by conventional wireless power transmitters. The first method of device detection may be based on capacitive or optical detection. Following tentative detection of a device to be charged, a wireless power transmitter may switch to a second method of device detection. The second method is an inductive method, to confirm the presence of a device to be charged.

According to some embodiments, a wireless power transmitter comprises an object-sensing circuit that is configured to receive a first signal from an object sensor that is separate from a transmit coil of the wireless power transmitter, wherein applying power to the transmit coil is not required to activate the object sensor. The object-sensing circuit is further configured to process the first signal to determine a proximity of an object to the wireless power transmitter, and provide a control signal to activate the transmit coil in response to determining proximity of the object.

The wireless power transmitter comprises a charging region designated for placement of a device to be charged by the wireless power transmitter. The wireless power transmitter further includes a transmit coil adjacent to the region, an inductive sensor configured to detect a change of inductance of the transmit coil, and an object sensor different from the inductive sensor that is configured to detect the presence of an object placed in the charging region. The object sensor may be a capacitive or optical sensor.

Methods for operating a wireless power transmitter are also contemplated. In some embodiments, a wireless power transmission method comprises acts of:
receiving a first signal from an object sensor that is separate from a transmit coil of a wireless power transmitter, wherein applying power to the transmit coil is not required to activate the object sensor; processing the first signal to determine a proximity of an object to the wireless power transmitter; providing a control signal to activate the transmit coil in response to determining proximity of the object, and detecting a change of impedance of the transmit coil by means of an inductive sensor to confirm the presence of the object placed in a charging region of the wireless power transmitter.

The foregoing summary is provided by way of illustration and is not intended to be limiting.

### BRIEF DESCRIPTION OF DRAWINGS

In the drawings, each identical or nearly identical component that is illustrated in various figures is represented by a like reference character. For purposes of clarity, not every component may be labeled in every drawing. Directional and orientation references made with respect to the drawings are for teaching purposes only, and are not meant to limit directions or configurations of the described apparatus. The drawings are not necessarily drawn to scale, with emphasis instead being placed on illustrating various aspects of the techniques and devices described herein.
**FIG. 1** depicts a wireless power transmitter in elevation view, according to some embodiments.
**FIG. 2** illustrates some components of a wireless power transmitter, according to some embodiments.
**FIG. 3** depicts some components of a wireless power transmitter that includes a capacitive sensor, according to some embodiments.
**FIG. 4** depicts an alternative capacitive sensing arrangement, according to some embodiments.
**FIG. 5A** depicts some components of a wireless power transmitter that includes optical sensing apparatus, according to some embodiments.
**FIG. 5B** depicts an elevation view of some components of a wireless power transmitter that includes optical sensing apparatus, according to some embodiments.
**FIG. 6** is a flow chart illustrating acts of a method for detecting and confirming the presence of a device to be charged by a wireless power transmitter, according to some embodiments.
**FIG. 7** depicts a capacitive-sensing circuit, according to some embodiments.

### DETAILED DESCRIPTION

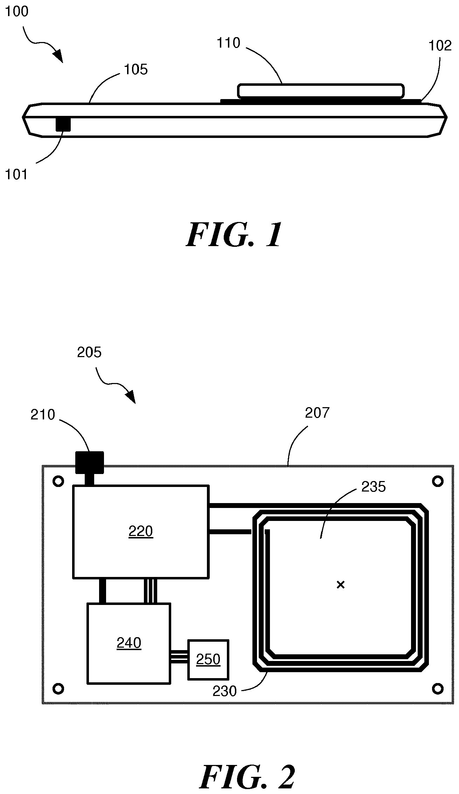

Conventionally, a wireless power transmitter 100 (as depicted in **FIG. 1** for example) may be configured to detect the presence of a device 110 in a charging region 102 using inductance-based sensing during a standby operating mode. For example, a transmit coil of the wireless power transmitter may be activated periodically during the standby operating mode, and the coil's inductance may be sensed via an inductive or impedance sensor (not shown) of the wireless power transmitter. Changes in the inductance of the transmit coil may indicate the presence of a device 110 placed in the charging region 102. When the inductive sensor reports a change in inductance of the transmit coil (indicating that a device has been placed in the charging region), the wireless power transmitter may automatically transition to a charging state.

Although inductance-based sensing to determine the presence of a device 110 in the charging area 102 makes use of the transmit coil of the wireless power transmitter, the inventors have recognized that this approach to sensing a device 110 can consume an appreciable amount of power during a standby operating mode of the wireless power transmitter 100. The inventors have recognized and appreciated that in some cases, the amount of power consumed for sensing a device during the standby mode may result in excessive "standby" power consumption.

Referring again to **FIG. 1**, a wireless power transmitter may be a low-profile electronic device that can be placed in any convenient location (*e.g.,* on a desktop, countertop, night stand, in a vehicle, *etc.*), and may include a casing 105 that encloses electronic components such as a charging coil and a power converter. In some implementations, a wireless power transmitter may be a large device located in a facility and used to charge or power large apparatuses, such as electric vehicles. A wireless power transmitter may include a region 102 (*e.g.,* a pad or marked area) designated for charging a wireless power receiving device 110. The wireless power receiving device may include a receiving coil and be adapted to be powered or charged wirelessly. When a device 110 is placed in the charging region 102 and the wireless power transmitter 100 activated, power may be transferred wirelessly from a transmit coil of the wireless power transmitter to the device 110. A wireless power transmitter may include user controls, such as On/Off buttons 101, touchpad, or other manually-operated controls to control the operation of the wireless power transmitter 100.

Further details of a wireless power transmitter 100 are depicted in **FIG. 2**. According to some embodiments, the wireless power transmitter may include a circuit board 205 that includes one or more electronic components of the wireless power transmitter, such as a power converter 220, a processor 240 or control circuitry, and a transmit coil 230. The power converter 220 may convert power from a power source to produce an oscillating current that is applied to the coil 230. In some embodiments, the power source may be an external source (*e.g.,* a conventional residential or commercial AC line source, such as, but not limited to, 60Hz, 100 - 127 VAC). Other examples of line power sources include 60Hz, 220 - 240 VAC, 50Hz, 100 - 127 VAC, and 50Hz, 220 - 240 VAC. The power converter may receive power through a power jack 210 and/or an extension cord that plugs into a conventional residential of commercial AC power outlet or DC power outlet of a vehicle, for example. In some implementations, a power transmitter may include a battery (not shown), which may be connected to the power converter and/or processor 240 to provide uninterruptible power. In some embodiments, a power converter 220 may include a switched-mode power supply and filtering circuitry configured to convert power from a power source to oscillating current that is applied to the charging or transmit coil 230. The oscillating current may oscillate at a fixed frequency in compliance with wireless power transfer standards, or vary over a range of frequencies in compliance with other wireless power transfer standards. For example, the oscillating current may oscillate at approximately 6.78 MHz, though other frequencies may be used in some cases. In some embodiments, a power converter may include one or more impedance matching networks to facilitate power transfer between the power converter 220 and the power transmit coil 230.

The transmit coil 230 may comprise a conductive coil having a central axis and open area 235. The coil 230 may comprise one or multiple conductive turns, and may be connected to a power converter 220. Coil 230, or any coil described herein, may have any suitable shape (*e.g.,* square, rectangular, polygonal, circular, oval, *etc*.). A transmit coil 230 may be formed from one or multiple wound wires, or may be patterned as one or more conductive current loops on one or more levels of a printed circuit board. An oscillating current applied to the conductive coil produces an oscillating magnetic field in the vicinity of the coil 230, and can extend through the wireless power transmitter's casing 105.

According to some embodiments, a wireless power transmitter 100 may further include a processor 240 or control circuitry and a signal transceiver 250. The processor may comprise a microcontroller, microprocessor, digital signal processor (DSP), field programmable gate array (FPGA), analog circuitry, logic circuitry, or a combination thereof, by way of example. The processor 240 may be in communication with at least one memory device (not shown), which may store machine-readable instructions that can be executed by the processor to adapt the wireless power transmitter 100 to execute operations related to power transmission. The memory device may include RAM, ROM, flash memory, cached memory, or any other suitable memory. The processor 240 may also communicate with the power converter 220. For example, the processor may be connected to the power converter with one or more electrical connections through which power and data may be transferred. Processor 240 may manage control of the wireless power transmitter 100 by coordinating operation of, sending data to, and processing data from the power converter 220 and transceiver 250.

In some embodiments, the transceiver 250 may comprise a radio-frequency (RF) transmitter for transmitting and receiving data signals to and from an external device (*e.g.,* a device 110 to be charged). Transceiver 250 may be configured for Wi-Fi or Bluetooth communications, for example, though transceiver 250 is not limited to only these communication protocols. In some implementations, transceiver 250 may be configured for wired communications (*e.g*., via a universal serial bus). In some implementations, the transceiver may include separate transmitting and receiving chips or circuits. In some embodiments, the transceiver 250 may use a same magnetic coupling link that is used for wireless power transmission to send and receive data from a wireless power receiving device 110. Such communication processes may include, but are not limited to, "in-band communications," "load modulation," or "backscatter modulation".

According to some embodiments, a wireless power transmitter 100 may operate in a high-power state when charging a device placed in the charging region 102. When the device 110 is fully charged or is removed from the wireless power transmitter, the wireless power transmitter may automatically transition to a standby operating mode. For example, the wireless power transmitter 100 may communicate with the device 110 to be charged, and determine when the device has reached a maximum charging level. The wireless power transmitter 100 may then transition to a standby operating mode.

According to some embodiments, a wireless power transmitter 100 may be configured to detect the presence of a device 110 placed in the charging region 102, while the wireless power transmitter is in a standby operating mode. For example, after a device 110 has been removed from the charging region and while the wireless power transmitter is in the standby operating mode, the transmitter 100 may be configured to determine whether a device 110 has been placed in the charging area. Conventionally, the determination may be done by powering up the transmit coil of the transmitter. If the transmitter 100 determines that a device has been placed in the charging area, the transmitter may automatically transition to a charging state so that a user need not provide input to the wireless power transmitter to initiate charging.

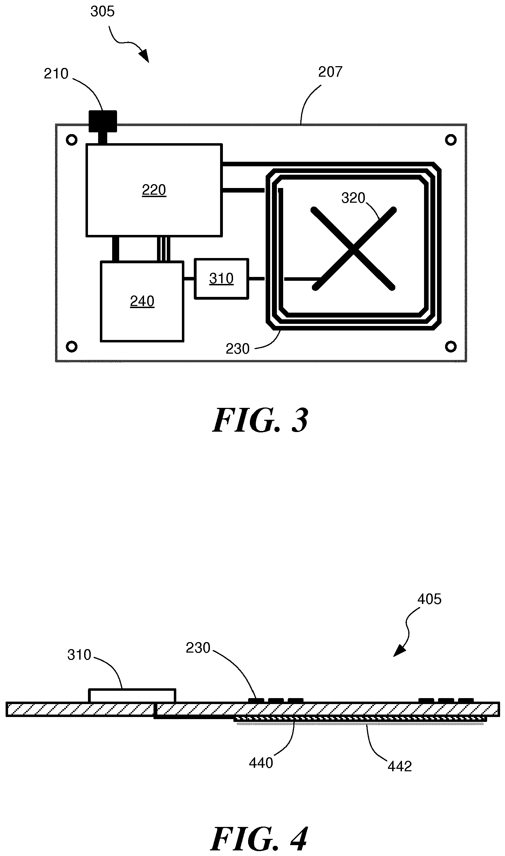

In an effort to reduce power consumption by a wireless power transmitter 100 when sensing devices 110 during a standby operating mode, the inventors have conceived of apparatus and techniques for low-power detection of devices placed in a charging region 102 of a wireless power transmitter 100. **FIG. 3** depicts one embodiment of a capacitance-based sensing paradigm that may be implemented in a wireless power transmitter. According to some embodiments, at least one electrode 320 of a capacitive sensor may be formed on a circuit board 305 of a wireless power transmitter. The at least one electrode 320 may be formed in any suitable pattern and located in or outside an open area 235 of the transmit coil 230. In preferred embodiments, the electrode or electrodes are shaped and located to reduce power losses for the transmitted power. For example, the electrode or electrodes may comprise narrow lines, circles, or curves located in the open area, or at regions of lower magnetic fields. In some cases, an electrode for a capacitive sensor may comprise one or more conductive traces formed on a printed circuit board and located within or adjacent to the transmit coil. The electrode or electrodes may be formed on the same level or different level of the printed circuit board as the transmit coil 230. In some implementations, an electrode for a capacitive sensor may comprise the transmit coil 230.

The at least one electrode 320 may be connected to a capacitive-sensing circuit 310 that is configured to evaluate capacitance of the at least one electrode 320. For example, the capacitive-sensing circuit 310 may detect changes in capacitance of the at least one electrode from a nominal value of capacitance that is measured when no device is placed in the charging area 102. When an object or device is placed in the charging area (*e.g.,* in close proximity to the transmit coil 230), the capacitance of the at least one electrode may change and the change may be detected by the capacitive-sensing circuit 310 to indicate proximity of the object or device.

According to some embodiments, an output from the capacitive-sensing circuit may be communicated to and received by the controller 240 of the wireless power transmitter. The controller 240 may evaluate a signal received from the capacitive-sensing circuit 310 and, based upon the received value, activate the transmit coil 230 to inductively sense and confirm the presence of a device 110 in the charging area 102 of the wireless power transmitter. In some implementations, the presence of a device 110 in the charging area can be confirmed using an inductive-sensing technique.

The inductive-sensing technique may be realized by sensing one or more of a number of quantities that include, but are not limited to, coil inductance, AC coil current, AC coil voltage, coil quality factor, reflected impedance, voltage-to-standing-wave ratio, and amplifier input current. A receiver placed in the charging area will generally create a real and/or imaginary impedance shift of the transmit coil's impedance that causes a disturbance on one or more of these quantities. Inductive sensing requires that the inductive coil be energized to transmit an electromagnetic beacon, which may result in a significant level of power consumption.

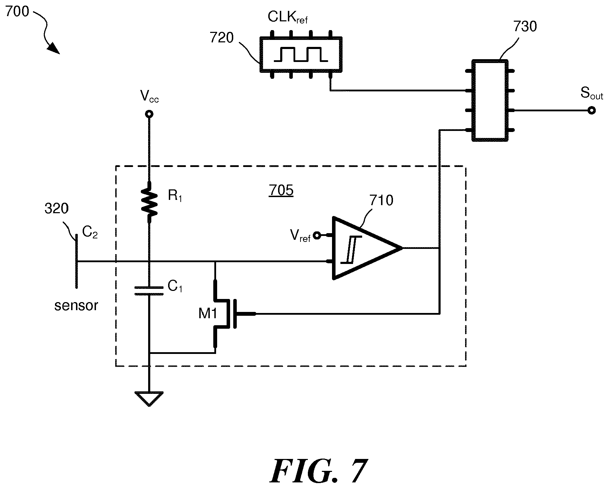

The inventors have recognized and appreciated that the amount of power consumed for capacitive sensing can be significantly less than the amount of power consumed for inductive sensing. For example, inductive sensing conventionally requires powering the transmit coil 230 at least intermittently at high power levels that can require brief bursts of power at the 100 mW level or higher. Capacitive sensing circuits, such as the circuit depicted in **FIG. 7**, may operate at power levels significantly lower than these values (*e.g.,* 1/10^{th} or less power than inductive sensors). A capacitive sensing circuit may be operated continuously in some implementations, or may be operated intermittently in other cases.

In some embodiments, a wireless power transmitter 100 can be configured to use a first, low-power, sensing apparatus and method (*e.g*., capacitive sensing) to initially detect the presence of an object proximal to the charging area, when operating in a standby mode. The first sensing apparatus and method can be activated intermittently during the standby operating mode. Once an object is sensed, control circuitry of the wireless power transmitter 100 can activate a higher-power sensing apparatus and method (*e.g*., inductive sensing) to confirm the presence of a device 110 to be charged.

An alternative embodiment of a capacitive-sensing apparatus for a wireless power transmitter is depicted in **FIG. 4**. According to some embodiments, a circuit board 405 for a wireless power transmitter may include a transmit coil 230 and a ferromagnetic shield 440 located adjacent to the transmit coil. For example, the ferromagnetic shield may be formed on an opposite side of the printed circuit board from the transmit coil, and may guide magnetic field produced by the transmit coil away from circuit components below the shield 440. In some embodiments the ferromagnetic shield 440 may be used to concentrate the magnetic field near the transmit coil 230, so as to reduce power losses that might result from the magnetic field extending into lossy materials below the transmit coil. According to some embodiments, the ferromagnetic shield 440 may be conductive and additionally used as an electrode of a capacitive sensor. For example, the ferromagnetic shield 440 may be electrically connected to the capacitive-sensing circuit 310, which can detect changes in capacitance of the ferromagnetic shield. When a device 110 is placed in a charging region 102 of a wireless power transmitter, it may alter the capacitance associated with the ferromagnetic shield 440. A change in capacitance of the ferromagnetic shield may be detected by the capacitive-sensing circuit 310 and reported to the controller 240, for example.

Alternatively, a thin conductive film 442 may be formed adjacent to the ferromagnetic shield 440 and used as an electrode of a capacitive sensor. For example, a thin film of metal or other conductor, which may be non-magnetic, may be formed on (above or below) the ferromagnetic shield 440 when it is manufactured. The thin film may be electrically connected to the capacitive-sensing circuit 310, which can evaluate a capacitance of the thin film. A proximal device 110 can alter the thin film's capacitance, which can be detected by the capacitive-sensing circuit and reported to the controller.

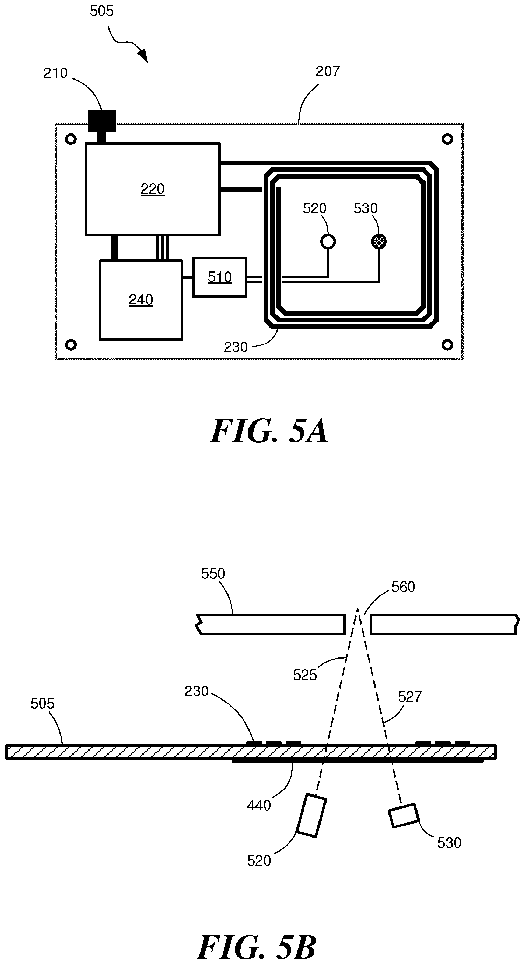

Other low-power sensing techniques are also contemplated. **FIG. 5A** depicts an optical apparatus for sensing the presence of a device 110 to be charged by a wireless power transmitter. According to some embodiments, optical sensing apparatus may comprise a light source 520 and the photodetector 530 mounted on or within a wireless power transmitter 100. The light source may be a light-emitting diode (LED) or other low-power light source. The light source 520 and photodetector 530 may be mounted on a circuit board 505 that includes a transmit coil 230. The light source and photodetector may be connected to an optical circuit 510 that is configured to activate the light source 520 and to receive signals from the photodetector 530. The optical circuit 510 may be connected to or incorporated with a controller 240. In some implementations, the light source may be mounted below a circuit board 505 is depicted in **FIG. 5B**.

The light source 520 may be arranged to illuminate at least a portion of a device 110 placed in the charging region 102 of a wireless power transmitter, as depicted in the elevation view of **FIG. 5B**. For example, there may be a hole or window 560 in a casing 550 of the wireless power transmitter, through which a light beam 525 from the light source may travel. When a device 110 is placed in the charging region 102, light from the light beam 525 may be scattered back to a photodetector 530. The presence of a signal scattered back from a device may be detected by the photodetector and sent to the optical circuit 510 and/or the controller 240. The signal from the photodetector may be processed to determine the presence of the device 110 in the charging region.

In some implementations, the light source 520 and photodetector 530 may be mounted below a circuit board 505 that contains a transmit coil 230 and ferromagnetic shield 440. Holes may be opened through the circuit board 505 and ferromagnetic shield 440 for the light beam 525 and backscattered beam 527 to pass. When a device is not placed in the charging region 102, there may be little or no backscattered beam to the photodetector 530.

According to some implementations the light source 520 may be flashed for a brief period of time (*e.g*., less than 10 ms or even less than 1 ms) intermittently while the wireless power transmitter is operating in a standby mode. The flashing can be repeated at regular intervals (*e.g*., 1-4 times per second or less). By flashing the light source 520 briefly, power consumption can be appreciably reduced during standby mode.

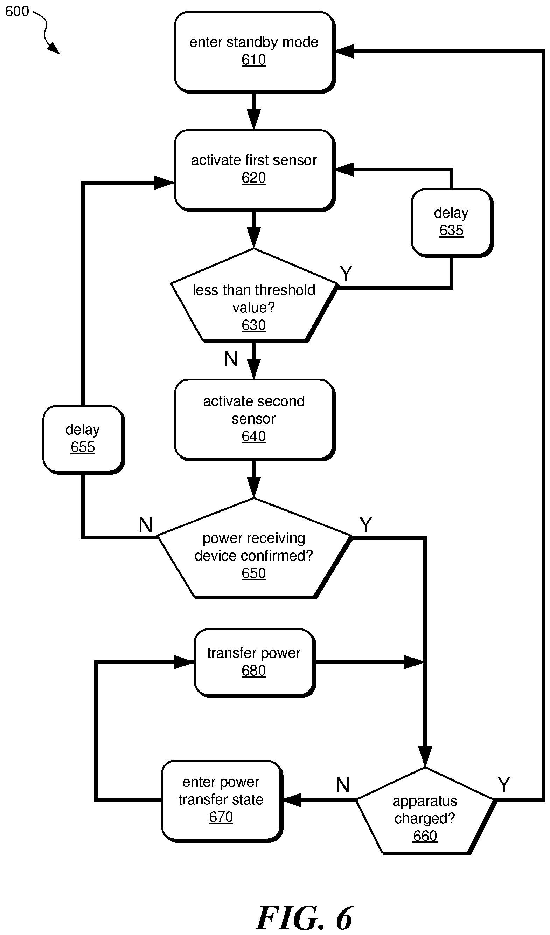

**FIG. 6** depicts acts for an embodiment of a method 600 for operating a wireless power transmitter to sense a device placed in a charging region of the wireless power transmitter. According to some embodiments, a method for detecting a device 110 to be charged may include acts of entering 610 a standby mode, in which power to a transmit coil 230 of the wireless power transmitter 100 is deactivated. A method 600 may further include activating 620 a first sensor to detect or sense the presence of a device placed in the charging region 102 of the wireless power transmitter. Following activation of a first sensor, a controller of the wireless power transmitter may determine 630 whether a measured value (*e.g*., capacitance value, optical signal value) is less than a predetermined threshold value. For example, a nominal value may be a value measured when no device is placed in the charging area 102 of the wireless power transmitter. A threshold value may be set at the nominal value, or at a value greater than or less than the nominal value. If a measured value less than the threshold value has been detected from the first sensor, for example, a method 600 may include delaying 635 for a period of time before reactivating 620 the first sensor.

If a measured value greater than the threshold value has been detected from the first sensor, a controller of the wireless power transmitter may activate 640 a second sensor which is an inductive sensor different from the first sensor. This may comprise activating a magnetic beacon using the transmit coil 230 to inductively sense the presence of a device 110. The controller may then determine 650 from the second sensor whether a wireless power receiving device 110 is present in the charging area 102 of the wireless power transmitter.

If it is determined 650 that a wireless power receiving device is not located in the charging area, the controller may delay 655 for a period of time before reactivating 620 the first sensor. Additionally, the controller may deactivate the transmit coil 230 and return to a standby mode.

If it is determined that a wireless power receiving device 650 is located in the charging area 102, the controller 240 may determine 660 whether the wireless power receiving device is fully charged. If it is determined that the wireless power receiving device is fully charged, the wireless power transmitter may re-enter 610 the standby mode. If it is determined that the wireless power receiving device is not charged, or not fully charged, the wireless power transmitter may enter 670 a power transfers state and transfer power 680 to the wireless power receiving device 110. During operation in the power transfer state the wireless power transmitter may repeatedly determine 660 whether the wireless power receiving device 110 is fully charged.

**FIG. 7** depicts a non-limiting example of a capacitive-sensing circuit 700 configured to sense changes in capacitance, according to some embodiments. A capacitance sensing circuit may have an input connected to at least one electrode 320 formed on a circuit board of a wireless power transmitter, as depicted in **FIG. 3**, for example. The electrode 320 may connect to an RC-oscillator circuit 705. The RC oscillator circuit may comprise a Schmitt trigger 710 or comparator that drives a transistor M1 connected in parallel with a capacitor of the RC oscillator circuit. The oscillator circuit 705 may oscillate at a frequency that depends predominantly on an RC time constant determined by the values of resistor R₁ and capacitor C₁. The sensing electrode 320 may also contribute capacitance C₂ that affects the oscillation frequency of the oscillator 705. When a conductive object, such as a wirelessly powered or wirelessly chargeable device is placed near the electrode 320, the capacitance C₂ associated with the electrode may change, resulting in a change of oscillation frequency of the oscillator circuit 705.

An output from the oscillator circuit 705 may be provided to a frequency-comparison circuit 730 along with a signal from a reference clock 720. The frequency of the reference clock may be fixed. Changes in the oscillation frequency from the oscillator circuit 705 (due to changes in capacitance C₂ at sensor electrode 320) can be determined by comparison to the reference clock. The changes in the RC oscillator's frequency will cause changes in an output signal Sₒᵤₜ from the frequency-comparison circuit 730. According to some embodiments, the output signal Sₒᵤₜ may be provided to a comparator or signal processor (not shown) to detect a threshold crossing. Detection of the threshold crossing, *e.g.,* by control circuitry, may cause issuance of a control signal to activate inductive sensing for a wirelessly powered or chargeable device.

In some embodiments, components of a capacitive-sensing circuit and/or logic circuitry for implementing acts of a method 600 for sensing an object may be included in an integrated circuit, such as an application-specific integrated circuit (ASIC) or field-programmable gate array (FPGA), for a wireless power transmitter. In some implementations, components of a capacitive-sensing circuit and/or logic circuitry for implementing acts of method 600 may be included on a printed circuit board (PCB) for a wireless power transmitter. In some embodiments, acts of a method 600 may be executed at least in part by a microcontroller or microprocessor adapted to operate a wireless power transmitter.

Various aspects of the apparatus and techniques described herein may be used alone, in combination, or in a variety of arrangements not specifically discussed in the embodiments described in the foregoing description and is therefore not limited in its application to the details and arrangement of components set forth in the foregoing description or illustrated in the drawings. For example, aspects described in one embodiment may be combined in any manner with aspects described in other embodiments. However, the scope of the invention is solely defined by the appended claims.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," or "having," "containing," "involving," and variations thereof herein, is meant to encompass the items listed thereafter and equivalents thereof as well as additional items. For example, an apparatus, structure, device, layer, or region recited as "including," "comprising," or "having," "containing," "involving," a particular material is meant to encompass at least the material listed and any other elements or materials that may be present.

## Claims

1. A wireless power transmitter (100) comprising:
an object-sensing circuit configured to:
receive a first signal from an object sensor that is separate from a transmit coil (230) of the wireless power transmitter, wherein applying power to the transmit coil is not required to activate the object sensor;
process the first signal to determine a proximity of an object (11) to the wireless power transmitter; and
provide a control signal to activate the transmit coil (230) in response to determining proximity of the object, the wireless power transmitter **characterised by** further comprising
an inductive sensor configured to detect a change of impedance of the transmit coil and to confirm the presence of the object placed in a charging region of the wireless power transmitter.

2. The wireless power transmitter of claim 1, wherein the object sensor comprises a capacitive sensor.

3. The wireless power transmitter of claim 2, wherein the capacitive sensor comprises an electrode (320) formed on a same circuit board (305) as the transmit coil, at least one conductive trace located within or adjacent to the transmit coil, or a ferromagnetic shield (440) located on a side of the transmit coil opposite the charging region.

4. The wireless power transmitter of any one of claims 1 through 3, further comprising a control circuit configured to activate the object-sensing circuit during a standby mode of the wireless power transmitter while the transmit coil is deactivated.

5. The wireless power transmitter of claim 4, wherein the control circuit is further configured to activate the object-sensing circuit intermittently during the standby mode.

6. The wireless power transmitter of claim 1, wherein the object sensor comprises an optical detector (530).

7. The wireless power transmitter of claim 6, wherein the object sensor further comprises an optical source (520) arranged to illuminate an object placed in a charging region of the wireless power transmitter.

8. The wireless power transmitter of claim 7, wherein the optical source is a light-emitting diode.

9. A wireless power transmission method comprising:
receiving a first signal from an object sensor that is separate from a transmit coil (230) of a wireless power transmitter, wherein applying power to the transmit coil is not required to activate the object sensor;
processing the first signal to determine a proximity of an object (11) to the wireless power transmitter;
providing a control signal to activate the transmit coil (230) in response to determining proximity of the object, and **characterised by**
detecting a change of impedance of the transmit coil by means of an inductive sensor to confirm the presence of the object placed in a charging region of the wireless power transmitter.

10. The method of claim 9, wherein the object sensor comprises a capacitive sensor.

11. The method of claim 10, wherein the capacitive sensor comprises an electrode (320) formed on a same circuit board (305) as the transmit coil (230) of the wireless power transmitter, at least one conductive trace located within or adjacent to a transmit coil of the wireless power transmitter, or a ferromagnetic shield (440) located adjacent to the transmit coil of the wireless power transmitter.

12. The method of claim 9, wherein the object sensor comprises an optical detector (530) and an optical source (520) that is arranged to illuminate the object when placed in the charging region of the wireless power transmitter.

13. The method of any one of claims 9 through 12, further comprising operating the wireless power transmitter in a standby mode and activating an object-sensing circuit configured to receive the first signal intermittently during the standby mode.

14. The method of claim 13, further comprising:
providing a signal to operate the wireless power transmitter in a charging mode to charge the device if it is confirmed that a device to be charged is located in the charging region based upon the detected change in impedance.

15. The method of claim 13, further comprising:
deactivating the transmit coil if it is confirmed that a device to be charged is not located in the charging region based upon the detected change in impedence.

## Patentansprüche

1. Drahtloser Energieübertrager (100), aufweisend:
eine Objekterfassungsschaltung, die konfiguriert ist zu:
einem Empfangen eines ersten Signals von einem Objektsensor, der von einer Übertragungsspule (230) des drahtlosen Energieübertragers getrennt ist, wobei es nicht erforderlich ist, an die Übertragungsspule Strom anzulegen, um den Objektsensor zu aktivieren;
einem Verarbeiten des ersten Signals, um eine Nähe eines Objekts (11) zu dem drahtlosen Energieübertrager zu bestimmen;
und einem Bereitstellen eines Steuersignals, um die Übertragungsspule (230) in Reaktion auf ein Bestimmen einer Nähe des Objekts zu aktivieren, wobei der drahtlose Energieübertrager **dadurch gekennzeichnet ist, dass** er ferner einen induktiven Sensor aufweist, der konfiguriert ist, um eine Impedanzänderung der Übertragungsspule zu erkennen und das Vorhandensein des Objekts zu bestätigen, das in einer Laderegion des drahtlosen Energieübertragers positioniert ist.

2. Drahtloser Energieübertrager nach Anspruch 1, wobei der Objektsensor einen kapazitiven Sensor aufweist.

3. Drahtloser Energieübertrager nach Anspruch 2, wobei der kapazitive Sensor eine Elektrode (320) aufweist, die auf einer selben Schaltplatine (305) wie die Übertragungsspule ausgebildet ist, wobei sich mindestens eine leitfähige Spur in oder neben der Übertragungsspule befindet oder eine ferromagnetische Abschirmung (440) auf einer Seite der Übertragungsspule gegenüber der Laderegion befindet.

4. Drahtloser Energieübertrager nach einem der Ansprüche 1 bis 3, ferner aufweisend eine Steuerschaltung, die konfiguriert ist, um die Objekterfassungsschaltung während eines Bereitschaftsmodus des drahtlosen Energieübertragers zu aktivieren, wobei die Übertragungsspule deaktiviert ist.

5. Drahtloser Energieübertrager nach Anspruch 4, wobei die Steuerschaltung ferner konfiguriert ist, die Objekterfassungsschaltung während des Bereitschaftsmodus intermittierend zu aktivieren.

6. Drahtloser Energieübertrager nach Anspruch 1, wobei der Objektsensor einen optischen Detektor (530) aufweist.

7. Drahtloser Energieübertrager nach Anspruch 6, wobei der Objektsensor ferner eine optische Quelle (520) aufweist, die angeordnet ist, um ein Objekt zu beleuchten, das in einer Laderegion des drahtlosen Energieübertragers positioniert ist.

8. Drahtloser Energieübertrager nach Anspruch 7, wobei die optische Quelle eine Licht emittierende Diode ist.

9. Drahtloses Energieübertragungsverfahren, aufweisend:
ein Empfangen eines ersten Signals von einem Objektsensor, der von einer Übertragungsspule (230) eines drahtlosen Energieübertragers getrennt ist, wobei es nicht erforderlich ist, an die Übertragungsspule Strom anzulegen, um den Objektsensor zu aktivieren;
ein Verarbeiten des ersten Signals, um eine Nähe eines Objekts (11) zu dem drahtlosen Energieübertrager zu bestimmen;
ein Bereitstellen eines Steuersignals, um die Übertragungsspule (230) in Reaktion auf ein Bestimmen einer Nähe des Objekts zu aktivieren, und **gekennzeichnet durch** ein Erkennen einer Impedanzänderung der Übertragungsspule mittels eines induktiven Sensors, um das Vorhandensein des Objekts zu bestätigen, das in einer Laderegion des drahtlosen Energieübertragers positioniert ist.

10. Verfahren nach Anspruch 9, wobei der Objektsensor einen kapazitiven Sensor aufweist.

11. Verfahren nach Anspruch 10, wobei der kapazitive Sensor eine Elektrode (320) aufweist, die auf einer selben Schaltplatine (305) wie die Übertragungsspule (230) des drahtlosen Energieübertragers ausgebildet ist, wobei sich mindestens eine leitfähige Spur in oder neben einer Übertragungsspule des drahtlosen Energieübertragers befindet oder eine ferromagnetische Abschirmung (440) benachbart zu der Übertragungsspule gegenüber dem drahtlosen Energieübertrager befindet.

12. Verfahren nach Anspruch 9, wobei der Objektsensor einen optischen Detektor (530) und eine optische Quelle (520) aufweist, die angeordnet ist, um das Objekt zu beleuchten, wenn es in der Laderegion des drahtlosen Energieübertragers positioniert ist.

13. Verfahren nach einem der Ansprüche 9 bis 12, ferner aufweisend ein Betreiben des drahtlosen Energieübertragers in einem Bereitschaftsmodus und ein Aktivieren einer Objekterfassungsschaltung, die konfiguriert ist, um das erste Signal intermittierend während des Bereitschaftsmodus zu empfangen.

14. Verfahren nach Anspruch 13, ferner aufweisend:
ein Bereitstellen eines Signals zum Betreiben des drahtlosen Energieübertragers in einem Lademodus zum Laden der Einheit, wenn bestätigt auf Grundlage der erkannten Impedanzänderung wird, dass sich eine zu ladende Einheit in der Laderegion befindet.

15. Verfahren nach Anspruch 13, ferner aufweisend:
ein Deaktivieren der Übertragungsspule, wenn auf Grundlage der erkannten Impedanzänderung bestätigt wird, dass sich eine zu ladende Einheit nicht in der Laderegion befindet.

## Revendications

1. Émetteur de puissance sans fil (100) comprenant :
un circuit de détection d'objet configuré pour :
recevoir un premier signal provenant d'un capteur d'objet qui est séparé d'une bobine d'émission (230) de l'émetteur de puissance sans fil, ladite application d'une puissance à la bobine d'émission n'étant pas nécessaire pour activer le capteur d'objet ;
traiter le premier signal pour déterminer la proximité d'un objet (11) par rapport à l'émetteur de puissance sans fil ;
et fournir un signal de commande pour activer la bobine d'émission (230) en réponse à la détermination de la proximité de l'objet, l'émetteur de puissance sans fil étant caractérisé en comprenant en outre un capteur inductif configuré pour détecter un changement d'impédance de la bobine d'émission et pour confirmer la présence de l'objet placé dans une zone de charge de l'émetteur de puissance sans fil.

2. Émetteur de puissance sans fil selon la revendication 1, ledit capteur d'objet comprenant un capteur capacitif.

3. Émetteur de puissance sans fil selon la revendication 2, ledit capteur capacitif comprenant une électrode (320) formée sur une même carte de circuit (305) que la bobine d'émission, au moins une tracé conducteur situé à l'intérieur de la bobine d'émission ou à proximité de celle-ci, ou un blindage ferromagnétique (440) situé sur un côté de la bobine d'émission opposé à la zone de charge.

4. Émetteur de puissance sans fil selon l'une quelconque des revendications 1 à 3, comprenant en outre un circuit de commande configuré pour activer le circuit de détection d'objet durant un mode veille de l'émetteur de puissance sans fil pendant que la bobine d'émission est désactivée.

5. Émetteur de puissance sans fil selon la revendication 4, ledit circuit de commande étant en outre configuré pour activer le circuit de détection d'objet par intermittence pendant le mode veille.

6. Émetteur de puissance sans fil selon la revendication 1, ledit capteur d'objet comprenant un détecteur optique (530).

7. Émetteur de puissance sans fil selon la revendication 6, ledit capteur d'objet comprenant en outre une source optique (520) agencée pour éclairer un objet placé dans une zone de charge de l'émetteur de puissance sans fil.

8. Émetteur de puissance sans fil selon la revendication 7, ladite source optique étant une diode électroluminescente.

9. Procédé d'émission d'énergie sans fil comprenant :
la réception d'un premier signal provenant d'un capteur d'objet qui est séparé d'une bobine d'émission (230) d'un émetteur de puissance sans fil, ladite application d'une puissance à la bobine d'émission n'étant pas nécessaire pour activer le capteur d'objet ;
le traitement du premier signal pour déterminer la proximité d'un objet (11) par rapport à l'émetteur de puissance sans fil ;
la fourniture d'un signal de commande pour activer la bobine d'émission (230) en réponse à la détermination de la proximité de l'objet, et **caractérisé par** la détection d'un changement d'impédance de la bobine d'émission au moyen d'un capteur inductif pour confirmer la présence de l'objet placé dans une zone de charge de l'émetteur de puissance sans fil.

10. Procédé selon la revendication 9, ledit capteur d'objet comprenant un capteur capacitif.

11. Procédé selon la revendication 10, ledit capteur capacitif comprenant une électrode (320) formée sur une même carte de circuit (305) que la bobine d'émission (230) de l'émetteur de puissance sans fil, au moins une tracé conducteur situé à l'intérieur d'une bobine d'émission de l'émetteur de puissance sans fil ou à proximité celle-ci, ou un blindage ferromagnétique (440) situé adjacent à la bobine d'émission de l'émetteur de puissance sans fil.

12. Procédé selon la revendication 9, ledit capteur d'objet comprenant un détecteur optique (530) et une source optique (520) qui est agencée pour éclairer l'objet lorsqu'il est placée dans la zone de charge de l'émetteur de puissance sans fil.

13. Procédé selon l'une quelconque des revendications 9 à 12, comprenant en outre le fonctionnement de l'émetteur de puissance sans fil en mode veille et l'activation d'un circuit de détection d'objet configuré pour recevoir le premier signal par intermittence durant le mode veille.

14. Procédé selon la revendication 13, comprenant en outre :
la fourniture d'un signal pour faire fonctionner l'émetteur de puissance sans fil en mode charge afin de charger le dispositif s'il est confirmé qu'un dispositif à charger est situé dans la zone de charge sur la base du changement d'impédance détecté.

15. Procédé selon la revendication 13, comprenant en outre :
la désactivation de la bobine d'émission s'il est confirmé qu'un dispositif à charger ne se situe pas dans la zone de charge sur la base du changement d'impédance détecté.
